# EUROPEAN PATENT APPLICATION

(11) **EP 4 501 476 A1**
(43) Date of publication of application: **05.02.2025**
(21) Application number: 23777794.1
(22) Date of filing: 10.03.2023
(51) Int. Cl.: B07C 5/34, B07C 5/02, B07C 5/36

(54) **ORE-DRESSING DEVICE**

(30) Priority: 28.03.2022 CN 202210310749
(71) Applicant: NUCTECH COMPANY LIMITED, Beijing 100084 (CN)
(72) Inventor: LI, Yuanjing, Beijing 100084 (CN); SUN, Shangmin, Beijing 100084 (CN); ZONG, Chunguang, Beijing 100084 (CN); LIU, Bicheng, Beijing 100084 (CN); WANG, Weizhen, Beijing 100084 (CN); CHI, Haojie, Beijing 100084 (CN); LIU, Lei, Beijing 100084 (CN)
(74) Representative: Gunzelmann, Rainer
(86) International application number: PCT/CN2023/080759
(87) International publication number: WO 2023/185417

(57) **Abstract**

A mineral separation device includes a conveying mechanism (10), a backscattering mechanism (20), and a spraying mechanism (30). The conveying mechanism (10) is configured to convey an ore so that the ore leaves from a discharge end of the conveying mechanism (10) and moves along a first trajectory; the backscattering mechanism (20) is provided below the conveying mechanism (10), and the backscattering mechanism (20) includes a backscattering emitter (21) configured to emit rays to the ore and a backscattering detector (22) configured to receive rays scattered from the ore to acquire a backscatter image; the spraying mechanism (30) is located below the backscattering mechanism (20), and the spraying mechanism (30) is configured to spray, according to a comparison result between a grayscale value of the backscatter image and a predetermined grayscale value, a high-pressure fluid to cause a portion of the ore to move along a second trajectory. By providing the backscattering mechanism (20) below the conveying mechanism (10), structures of the mechanisms of the mineral separation device are compact, and an overall size of the mineral separation device is reduced.

## Description

### CROSS-REFERENCE TO RELATED APPLICATION(S)

This application claims priority to Chinese Patent Application No. 202210310749.0, entitled "Mineral Separation Device" and filed with the CNIPA on March 28, 2022, which is incorporated herein by reference in its entirety.

### TECHNICAL FIELD

The present disclosure relates to a field of mineral separation technology, and in particular to a mineral separation device.

### BACKGROUND

With a continuous development and utilization of mineral resources and a development of mechanized mining technology, a dilution rate of ores has also increased. Therefore, a necessity of pre-separation of coarse-grained ores has been paid attention to, and requirements for separation are getting higher.

In a related art, a mineral separation is performed using an X-ray transmission technology, which has characteristics of high efficiency, cleanliness and environmental protection. However, an X-ray transmission source is located directly above a belt conveying mechanism, resulting in a large overall size of apparatus and an occupation of a large amount of space. In addition, X-rays that pass through an ore may be further attenuated or scattered due to a structure of a mineral separation device (for example, the need to pass through a belt) before reaching an X-ray detector, resulting in unclear imaging.

### SUMMARY

The present disclosure is intended to solve at least one of the technical problems existing in the related art. In view of this, an objective of the present disclosure is to provide a mineral separation device.

The mineral separation device according to embodiments of the present disclosure includes a conveying mechanism, a backscattering mechanism, and a spraying mechanism.

The conveying mechanism is configured to convey an ore so that the ore leaves from a discharge end of the conveying mechanism and moves along a first trajectory; the backscattering mechanism is provided below the conveying mechanism, and the backscattering mechanism includes a backscattering emitter configured to emit rays to the ore and a backscattering detector configured to receive rays scattered from the ore to acquire a backscatter image; the spraying mechanism is located below the backscattering mechanism, and the spraying mechanism is configured to spray, according to a comparison result between a grayscale value of the backscatter image and a predetermined grayscale value, a high-pressure fluid to cause a portion of the ore to move along a second trajectory.

According to embodiments of the present disclosure, by providing the backscattering mechanism below the conveying mechanism, the backscattering mechanism is equivalent to being hidden below the conveying mechanism, so that the structures of the mechanisms of the mineral separation device are compact and an overall size of the mineral separation device is reduced. The backscatter technology has a fast identification speed, which is conducive to rapid imaging, analysis, identification of the ore and an action of the spraying mechanism during a falling process of the ore. Furthermore, the transmission technology may fail to pass through an ore with a large particle size, and thus fail to acquire a complete image of the ore. In contrast, the backscatter technology may acquire a backscatter image only according to a ray signal scattered from a surface and a shallow layer of the ore and is not affected by a size of the ore. Therefore, the backscatter technology may be applied to separation of both ores with a large particle size and ores with a small particle size.

According to some embodiments of the present disclosure, the conveying mechanism, the backscattering emitter and the backscattering detector are arranged sequentially from top to bottom, the backscattering emitter is located below the discharge end of the conveying mechanism, and the backscattering detector is located below the backscattering emitter.

According to some embodiments of the present disclosure, the backscattering emitter is a flying spot device, and the flying spot device includes a flywheel provided with a beam hole and a fan-shaped box provided with a collimation slit.

According to some embodiments of the present disclosure, the backscattering emitter is configured to emit a pencil-shaped ray beam, and a scanning direction of the pencil-shaped ray beam is perpendicular to a vertical direction.

According to some embodiments of the present disclosure, the backscattering mechanism includes a first backscattering emitter and a second backscattering emitter; the conveying mechanism, the first backscattering emitter, the backscattering detector and the second backscattering emitter are arranged sequentially from top to bottom, the first backscattering emitter is located below the discharge end of the conveying mechanism, the backscattering detector is located below the first backscattering emitter, and the second backscattering emitter is located below the backscattering detector.

According to some embodiments of the present disclosure, the spraying mechanism includes a plurality of nozzles arranged in a width direction of the conveying mechanism, the nozzles have nozzle openings configured to spray high-pressure gas from bottom to top, and a spraying direction is at a predetermined angle a to a vertical direction.

According to some embodiments of the present disclosure, the predetermined angle a is in a range from 20° to 60°.

According to some embodiments of the present disclosure, the mineral separation device further includes a control system communicatively connected to the backscattering mechanism and the spraying mechanism, and the control system is configured to compare the grayscale value of the backscatter image with the predetermined grayscale value, so as to control turn-on of the spraying mechanism.

According to some embodiments of the present disclosure, the mineral separation device further includes a vibrating feeding mechanism, and the vibrating feeding mechanism is located at and connected to a feeding end of the conveying mechanism.

Additional aspects and advantages of the present disclosure may be partially provided in the following description, or partially become clear from the following description, or may be understood through practice of the present disclosure.

### BRIEF DESCRIPTION OF THE DRAWINGS

The above and/or additional aspects and advantages of the present disclosure will become clear and easily understood from the description of embodiments with reference to the accompanying drawings. In the accompanying drawings:
FIG. 1 shows a front view of a mineral separation device according to embodiments of the present disclosure;
FIG. 2 shows a right view of a mineral separation device according to embodiments of the present disclosure;
FIG. 3 shows another right view of a mineral separation device according to embodiments of the present disclosure; and
FIG. 4 shows a schematic structural diagram of a flying spot device according to embodiments of the present disclosure.

In the accompanying drawings, 10 represents a conveying mechanism, 11 represents a belt, 12 represents a roller, 13 represents a baffle, 20 represents a backscattering mechanism, 21 represents a backscattering emitter, 21a represents a first backscattering emitter, 21b represents a second backscattering emitter, 211 represents a flywheel, 2111 represents a wheel disc, 2112 represents a wheel flange, 212 represents a fan-shaped box, 22 represents a backscattering detector, 31 represents a spraying mechanism, and 31 represents a nozzle.

### DETAILED DESCRIPTION OF EMBODIMENTS

Embodiments of the present disclosure will be described in detail below, and examples of embodiments are shown in the accompanying drawings. Throughout the accompanying drawings, the same or similar reference signs represent the same or similar elements or represent elements having the same or similar functions. Embodiments described below with reference to the accompanying drawings are exemplary and just used to explain the present disclosure, but should not be construed as limiting the present disclosure.

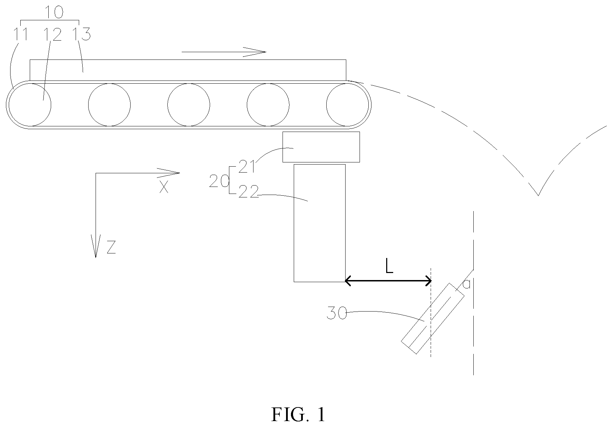

A mineral separation device according to embodiments of the present disclosure will be described below with reference to FIG. 1 to FIG. 4.

As shown in FIG. 1, the mineral separation device according to embodiments of the present disclosure includes a conveying mechanism 10, a backscattering mechanism 20, and a spraying mechanism 30. The conveying mechanism 10 is used to convey an ore, and the conveying mechanism 10 may convey the ore in a first direction, which is shown as an arrow direction in FIG. 1. The ore may leave from a discharge end of the conveying mechanism 10 and move along a first trajectory. The backscattering mechanism 20 is provided below the conveying mechanism 10, and includes a backscattering emitter 21 and a backscattering detector 22. The backscattering emitter 21 is used to emit rays to the ore, and the backscattering detector 22 is used to receive rays scattered from the ore to acquire a backscatter image. The spraying mechanism 30 is located below the backscattering mechanism 20. The spraying mechanism 30 may spray, according to a comparison result between a grayscale value of the backscatter image and a predetermined grayscale value, a high-pressure fluid to cause the ore to move along a second trajectory.

Ores may be classified into metallic ores and non-metallic ores according to properties of valuable minerals contained therein and utilized characteristics. Metallic ores have a large density, which ranges from 3.5 g/cm³ to 5.0 g/cm³. Most non-metallic ores have a small density. For example, rocks have a density ranging from 1.2 g/cm³ to 3.5 g/cm³. Metallic ores refer to metal-containing ores, which may be iron ores, manganese ores, vanadium ores, copper ores, lead ores, zinc ores, etc.

The mineral separation device in such embodiments may identify an ore using a backscatter technology, in which the ore is irradiated by X-rays or γ-rays having a particular energy, X-rays or γ-rays scattered back from a surface and a surface layer of the ore are collected, and a statistical analysis is performed to acquire an image of the surface of the ore. An ore having a small density may have a large scattering cross-section, and more photons are scattered back, so that the backscatter image of the ore is bright. An ore having a large density may have a small scattering cross-section, and fewer photons are scattered back, so that the backscatter image of the ore is dark.

In some embodiments, due to a density difference between a metallic ore and a non-metallic ore, it is possible to identify the metallic ore according to a grayscale value of a backscatter image of the metallic ore and a grayscale value of a backscatter image of the non-metallic ore. In some embodiments, iron ores may include siderite, hematite and magnetite according to an iron content. The siderite has a density in a range of 3.8 to 3.9 g/cm³, the hematite has a density in a range of 3.4 to 4.4 g/cm³, and the magnetite has a density in a range of 4.9 to 5.2 g/cm³. Then, any one of siderite, hematite and magnetite may be identified according to a grayscale value of a backscatter image of siderite, a grayscale value of a backscatter image of hematite and a grayscale value of a backscatter image of magnetite. In some embodiments, manganese ores may include pyrolusite, psilomelane and manganite according to a manganese content. The pyrolusite has a density of 7.44 g/cm³, the psilomelane has a density in a range of 4.7 to 4.8 g/cm³, and the manganite has a density in a range of 3.7 to 4.7 g/cm³. Then, any one of pyrolusite, psilomelane and manganite may be identified according to a grayscale value of a backscatter image of pyrolusite, a grayscale value of a backscatter image of psilomelane and a grayscale value of a backscatter image of manganite. In some embodiments, it is also possible to identify types of vanadium-containing ores according to a vanadium content. The above also applies to copper ores, lead ores, zinc ores, etc., and details will not be described here.

The mineral separation device further includes a control system, which is communicatively connected to the backscattering mechanism 20 and the spraying mechanism 30 in a wired or wireless manner. The backscattering mechanism 20 may acquire a backscatter image signal and send the backscatter image signal to the control system (not shown). After receiving the backscatter image signal, the control system may form a backscatter image and compare a grayscale value of the backscatter image with a predetermined grayscale value. For example, when the grayscale value of the backscatter image is less than or equal to the predetermined grayscale value, the control system may send a first signal to the spraying mechanism 30, so that the spraying mechanism 30 sprays a high-pressure fluid to cause the ore to move along a second trajectory. When the grayscale value of the backscatter image is greater than the predetermined grayscale value, the control system may send a second signal to the spraying mechanism 30, so that the spraying mechanism 30 does not operate and the ore keeps moving along the first trajectory. The predetermined grayscale value is a grayscale value of a desired ore, which may be a fixed value or an interval value. The predetermined grayscale value may be set as desired by those skilled in the art.

The control system may control the spraying mechanism. In a specific embodiment, the spraying mechanism 30 includes a plurality of nozzles 31 arranged in a width direction of the conveying mechanism 10, and the nozzles 31 may have nozzle openings that spray a high-pressure gas from bottom to top. In some embodiments, the plurality of nozzles 31 may be divided into a plurality of nozzle units, and one nozzle unit includes several nozzles 31. A nozzle unit corresponds to an electromagnetic valve, and the nozzles 31 in the nozzle unit may be turned on or turned off together by the electromagnetic valve. In some embodiments, a nozzle 31 corresponds to an electromagnetic valve, the electromagnetic valve controls turn-on and turn-off of the nozzle 31, and actions of the nozzles 31 may be independent of each other.

When the control system sends the first signal to the spraying mechanism 30, the spraying mechanism 30 may receive the first signal and control the electromagnetic valve for the nozzle unit corresponding to the desired ore, so that the nozzles in the nozzle unit corresponding to the desired ore spray a high-pressure fluid. Here, the nozzle unit corresponding to the ore is a nozzle unit covered by an orthographic projection of the desired ore on the spraying mechanism 30. Alternatively, when the control system sends the first signal to the spraying mechanism 30, the spraying mechanism 30 may receive the first signal and control the electromagnetic valve for the nozzle 31 corresponding to the desired ore, so that the nozzle 31 corresponding to the desired ore sprays a high-pressure fluid. Here, the nozzle 31 corresponding to the ore is a nozzle 31 covered by the orthographic projection of the desired ore on the spraying mechanism 30.

In the related art, ores may be identified using a transmission technology, in which a ray emitting mechanism of a transmission mechanism is located above a conveying mechanism, and a detector used to receive rays passing through ores is located below the conveying mechanism.

Based on this, a backscatter technology is adopted in the present disclosure. Compared with the transmission technology, the backscatter technology has the following advantages.

Firstly, the backscatter technology has a fast identification speed. For example, when a flying spot scanning is adopted, a rotation speed of a flywheel of a flying spot device may reach about 2000 rpm, which is conducive to rapid imaging, analysis, identification of the ore and the action of the spraying mechanism 30 during a falling process of the ore.

Secondly, in the present disclosure, by providing the backscattering mechanism 20 below the conveying mechanism 10, the backscattering mechanism 20 is equivalent to being hidden below the conveying mechanism 10, so that the mechanisms of the mineral separation device have a compact structure and an overall size of the mineral separation device is reduced.

Furthermore, the transmission technology may fail to pass through an ore with a large particle size, and thus fail to acquire a complete image of the ore. In contrast, the backscatter technology may acquire a backscatter image only according to rays scattered from the ore and is not affected by a size of the ore. Therefore, the backscatter technology may be applied to separation of both ores with a large particle size and ores with a small particle size.

In some embodiments, the conveying mechanism 10, the backscattering emitter 21 and the backscattering detector 22 are arranged sequentially from top to bottom, the backscattering emitter 21 is located below the discharge end of the conveying mechanism 10, and the backscattering detector 22 is located below the backscattering emitter 21.

It should be noted that the backscattering emitter 21 being located below the discharge end of the conveying mechanism 10 generally means that an orthographic projection of the backscattering emitter 21 on the conveying mechanism 10 is located at the discharge end of the conveying mechanism 10, and the backscattering detector 22 being located below the backscattering emitter 21 generally means that an orthographic projection of the backscattering detector 22 on the backscattering emitter 21 completely falls within the backscattering emitter 21.

Specifically, as shown in FIG. 2, the backscattering emitter 21 is located below the discharge end of the conveying mechanism 10, and a distance is formed between the backscattering emitter 21 and the discharge end of the conveying mechanism 10 in a Z direction. With such arrangement, X-rays or γ-rays emitted by the backscattering emitter 21 may be fully irradiated onto the ore, and it may be avoided that partial X-rays or γ-rays are blocked by the conveying mechanism 10. The backscattering detector 22 is located below the backscattering emitter 21 to receive X-rays or γ-rays scattered from the ore. A distance is formed between the backscattering detector 22 and the backscattering emitter 21 in the Z direction.

In a preferred embodiment of the present disclosure, as shown in FIG. 3, the mineral separation device includes a first backscattering emitter 21a and a second backscattering emitter 21b. The conveying mechanism 10, the first backscattering emitter 21a, the backscattering detector 22 and the second backscattering emitter 21b are arranged sequentially from top to bottom and spaced apart from each other. The first backscattering emitter 21a is located below the discharge end of the conveying mechanism 10, the backscattering detector 22 is located below the first backscattering emitter 21a, and the second backscattering emitter 21b is located below the backscattering detector 22. A distance between the first backscattering emitter 21a and the backscattering detector 22 in the Z direction is equal to a distance between the second backscattering emitter 21b and the backscattering detector 22 in the Z direction. The first backscattering emitter 21a and the second backscattering emitter 21b may operate alternately. With such arrangement, the first backscattering emitter 21a and the backscattering detector 22 may acquire an image of the surface of the ore, and the second backscattering emitter 21b and the backscattering detector 22 may acquire a further image of the surface of the ore. Here, for example, an interval or a phase difference between a beam emission time instant of the first backscattering emitter 21a and a beam emission time instant of the second backscattering emitter 21b may be controlled according to a time period of the ore falling from the first backscattering emitter 21a to the second backscattering emitter 21b, so that two backscatter images may be acquired for the same ore. By comparing grayscale values of the two acquired backscatter images (such as an average of the grayscale values) with the predetermined grayscale value, it is possible to improve a separation accuracy and separate the desired ore more accurately.

In addition, the backscattering emitter 21 may be a flying spot device, which includes a flywheel 211 provided with a beam hole and a fan-shaped box 212 provided with a collimation slit.

Further, the flying spot device includes a flywheel 211 and a fan-shaped box 212. The flywheel 211 is rotatable relative to the fan-shaped box 212, and a rotation speed of the flywheel 211 is about 2000 rpm. The flywheel 211 includes a wheel disc 2111 and a wheel flange 2112, the wheel flange 2112 is provided on an outer periphery of the wheel disc 2111 and covers a radial outer side of the fan-shaped box 212. A beam hole C for a radial light emission is provided along a circumference of the wheel flange 2112. The fan-shaped box 212 is coaxial with the wheel disc 2111 and is provided on a side surface of the wheel disc 2111, and is located on a radial inner side of the wheel flange 2112. A ray source is provided at a center of the fan-shaped box 212, and a collimation slit is provided on an arc surface of the fan-shaped box 212. As shown in FIG. 4, when the beam hole C passes through the fan-shaped box 212, X-rays or γ-rays may be emitted from the ray source and pass through the beam hole C through the collimation slit, that is, point X-rays may pass through a side surface of the flywheel 211 in a range from point A to point B. However, when the beam hole C passes through angles outside the fan-shaped box 212, neither X-rays nor γ-rays may pass through the side surface of the flywheel 211.

It should be noted that the backscattering emitter 21 may be a flying spot emitting device having a rotatable beam hole, or may be other flying spot emitting devices, such as a backscatter ray emitting device that swings back and forth to form backscatter scanning rays.

Furthermore, the backscattering emitter 21 may emit a pencil-shaped ray beam, and a scanning direction of the pencil-shaped ray beam is perpendicular to the vertical direction. The pencil-shaped ray beam emitted by the backscattering emitter 21 may scan the ore in a particular direction, as shown in FIG. 2, in a Y direction, and a scanning trajectory on the ore forms a straight scanning line. The ore moves from top to bottom, and when the ore falls by a particular distance, the backscattering emitter 21 may form another straight scanning line on the ore. In a beam emission cycle of the backscattering emitter 21, a falling distance of the ore is very small. Therefore, a distance between two adjacent straight scanning lines is very small, and several straight scanning lines may form a scanning surface, so that a substantially continuous backscatter image may be acquired for the ore.

Furthermore, the backscattering mechanism 20 may include a first movable frame (not shown) connected to the backscattering emitter 21 and a second movable frame (not shown) connected to the backscattering detector 22. The first movable frame may drive the backscattering emitter 21 to move back and forth in a first direction, and the second movable frame may drive the backscattering detector 22 to move back and forth in the first direction. In addition, the first movable frame and the second movable frame may be communicatively connected to the control system.

It should be noted that with an increase of a distance between the ore and the backscattering mechanism 20, an imaging effect may be greatly reduced. Therefore, selecting a suitable distance may help improve the imaging effect. When a conveying speed of the conveying mechanism 10 changes, the control system may provide feedback according to a change in the conveying speed, and the backscattering mechanism 20 may be driven by the first movable frame to move in the first direction, that is, the backscattering mechanism 20 may move back and forth in the X direction, so that the distance between the ore and the backscattering mechanism 20 is adjusted to be suitable to ensure the imaging effect. The first movable frame may be a telescopic mechanism, such as a ball screw mechanism, a rack and pinion mechanism, an electric push rod, etc. The backscattering detector 22 is also driven by the second movable frame to move in the first direction, that is, the backscattering detector 22 may move back and forth in the X direction, so that the backscattering detector 22 is always located directly below the backscattering emitter 21, and a relative position between the backscattering emitter 21 and the backscattering detector 22 may remain unchanged. The second movable frame may be a telescopic mechanism, such as a ball screw mechanism, a rack and pinion mechanism, an electric push rod, etc.

In some embodiments, the discharge end of the conveying mechanism 10 is higher than the feeding end of the conveying mechanism 10. With such arrangement, the ore may move upward for a certain distance before moving downward, and then a falling time period of the ore is extended, which is conductive to an analysis of the backscattering detector 22 and an action of the spraying mechanism 30.

Furthermore, the conveying mechanism 10 includes a belt 11, a plurality of rollers 12, and two baffles 13. The belt 11 is wound around the plurality of rollers 12. The belt 11 may convey the ore in the first direction. A length of the baffle 13 extends in the first direction, and the two baffles 13 are respectively located on both sides of the belt 11. With such arrangement, the two baffles 13 may function to block the ore and prevent the ore being conveyed from accidentally falling off the belt 11.

In some embodiments, the mineral separation device further includes a vibrating feeding mechanism (not shown). The vibrating feeding mechanism is located at and connected to the feeding end of the conveying mechanism 10, and may provide ores of substantially the same volume to the conveying mechanism 10. With such arrangement, the ores may automatically enter the conveying mechanism 10.

In some embodiments, the spraying mechanism 30 includes a plurality of nozzles 31 arranged in a width direction of the conveying mechanism 10. The nozzles 31 have nozzle openings that spray high-pressure gas from bottom to top, and a spraying direction is at a predetermined angle a to the vertical direction.

Specifically, as shown in FIG. 1 and FIG. 2, the spraying mechanism 30 is located below the backscattering mechanism 20, and the backscattering mechanism 20 is located close to a middle of the first trajectory. The middle here may refer to a middle position of a length of an orthographic projection of the first trajectory on ground in the X direction. A predetermined distance L is formed between the spraying mechanism 30 and the backscattering mechanism 20 in the X direction. The spraying mechanism 30 includes a plurality of nozzles 31, which are arranged in a row. An extension direction of the plurality of nozzles 31 is parallel to the width direction of the conveying mechanism 10, that is, the plurality of nozzles 31 are arranged in the Y direction. Moreover, an extension length of the plurality of nozzles 31 is the same as a width of the conveying mechanism 10. The nozzle openings of the nozzles 31 may spray high-pressure gas from bottom to top, and a spraying direction is at a predetermined angle to the vertical direction. The fluid may be a high-pressure gas or liquid. With such arrangement, the high-pressure fluid may exert a force on a lower end of the ore, which may help keep a movement trajectory of the ore on an XZ plane and avoid a collision between ores.

Furthermore, as shown in FIG. 1, the predetermined angle a ranges from 20° to 60°. With such arrangement, it is possible to change a direction of the force acting on the bottom of the ore and then adjust the second trajectory, so that the separated ore falls to a predetermined position.

In the description of the present disclosure, it should be understood that terms "up", "down", "front", "back", "left", "right", "vertical", "horizontal", "top", "bottom", "inside", "outside", etc., are used to indicate orientations or positional relationships shown in the accompanying drawings, which is just for the convenience of describing the present disclosure and simplifying the description, rather than indicating or implying that the device or element referred to necessarily has a specific orientation or is necessarily constructed and operated in a specific orientation. Therefore, those terms may not be understood as limitations to the present disclosure.

In the description of the specification, the description with reference to the terms "embodiment", "example", etc. means that a specific feature, structure, material or characteristic described in conjunction with the embodiment or example is included in at least one embodiment or example of the present disclosure. In the specification, exemplary expressions of the above terms do not necessarily refer to the same embodiment or example. Furthermore, the specific features, structures, materials or characteristics described may be combined in any suitable manner in any one or more embodiments or examples.

Although embodiments of the present disclosure have been shown and described, it may be understood by those skilled in the art that various changes, modifications, substitutions and variations may be made to those embodiments without departing from the principles and spirit of the present disclosure. The scope of the present disclosure is defined by the claims and their equivalents.

## Claims

1. A mineral separation device, comprising:
a conveying mechanism configured to convey an ore so that the ore leaves from a discharge end of the conveying mechanism and moves along a first trajectory;
a backscattering mechanism provided below the conveying mechanism, wherein the backscattering mechanism comprises a backscattering emitter configured to emit rays to the ore and a backscattering detector configured to receive rays scattered from the ore to acquire a backscatter image; and
a spraying mechanism located below the backscattering mechanism, wherein the spraying mechanism is configured to spray, according to a comparison result between a grayscale value of the backscatter image and a predetermined grayscale value, a high-pressure fluid to cause a portion of the ore to move along a second trajectory.

2. The mineral separation device according to claim 1, wherein the conveying mechanism, the backscattering emitter and the backscattering detector are arranged sequentially from top to bottom, the backscattering emitter is located below the discharge end of the conveying mechanism, and the backscattering detector is located below the backscattering emitter.

3. The mineral separation device according to claim 2, wherein the backscattering emitter is a flying spot device, and the flying spot device comprises a flywheel provided with a beam hole and a fan-shaped box provided with a collimation slit.

4. The mineral separation device according to claim 3, wherein the backscattering emitter is configured to emit a pencil-shaped ray beam, and a scanning direction of the pencil-shaped ray beam is perpendicular to a vertical direction.

5. The mineral separation device according to claim 1, wherein the backscattering mechanism comprises a first backscattering emitter and a second backscattering emitter, the conveying mechanism, the first backscattering emitter, the backscattering detector and the second backscattering emitter are arranged sequentially from top to bottom, the first backscattering emitter is located below the discharge end of the conveying mechanism, the backscattering detector is located below the first backscattering emitter, and the second backscattering emitter is located below the backscattering detector.

6. The mineral separation device according to claim 1, wherein the spraying mechanism comprises a plurality of nozzles arranged in a width direction of the conveying mechanism, the nozzles have nozzle openings configured to spray high-pressure gas from bottom to top, and a spraying direction is at a predetermined angle a to a vertical direction.

7. The mineral separation device according to claim 6, wherein the predetermined angle a is in a range from 20° to 60°.

8. The mineral separation device according to any one of claims 1 to 7, further comprising a control system communicatively connected to the backscattering mechanism and the spraying mechanism, wherein the control system is configured to compare the grayscale value of the backscatter image with the predetermined grayscale value, so as to control turn-on of the spraying mechanism.

9. The mineral separation device according to any one of claims 1 to 7, further comprising a vibrating feeding mechanism located at and connected to a feeding end of the conveying mechanism.
